# FASCICULE DE BREVET EUROPEEN

(11) **EP 2 350 623 B1**
(45) Date de publication et mention de la délivrance du brevet: **05.09.2018**
(21) Numéro de dépôt: 09760223.9
(22) Date de dépôt: 27.10.2009
(51) Int. Cl.: G01N 23/2251, G06T 7/00

(54) **COMPTAGE D'INCLUSIONS SUR ALLIAGES PAR ANALYSE D'IMAGES**
ZÄHLEN VON EINSCHLÜSSEN IN LEGIERUNGEN MITTELS BILDVERARBEITUNG
INCLUSION COUNTING IN ALLOYS BY IMAGE ANALYSIS

(30) Priorité: 27.10.2008 FR 0857268
(43) Date de publication de la demande: 03.08.2011
(73) Titulaire: Safran Aircraft Engines, 75015 Paris (FR)
(72) Inventeur: BEYA, William, F-93430 Villetaneuse (FR); CUOCO, Marie, F-91170 Viry Chatillon (FR); HINARD, Marie-Noëlle, F-91070 Bondoufle (FR); PELTIER, Béatrice, F-91800 Brunoy (FR)
(74) Mandataire: Desormiere, Pierre-Louis
(86) Numéro de dépôt international: PCT/FR2009/052066
(87) Numéro de publication internationale: WO 2010/049640

(56) Documents cités:
- JP-A- 61 062 849
- US-A- 4 560 872
- US-B1- 6 803 235
- SPITZIG W A ET AL: "SEM-based automatic image analysis of sulfide inclusions in hot-rolled carbon steels" METALLOGRAPHY, AMERICAN ELSEVIER, NEW YORK, NY, US, vol. 16, no. 2, 1 mai 1983 (1983-05-01), pages 171-198, XP024401904 ISSN: 0026-0800 [extrait le 1983-05-01]

## Description

La présente invention concerne un procédé de comptage et d'analyse d'inclusions dans un alliage par analyse d'image.

Certains alliages peuvent présenter des inclusions, une inclusion étant définie comme une particule microscopique dont la composition chimique est différente de celle de l'alliage. Ces inclusions se retrouvent de façon indésirable dans la masse de l'alliage. Elles sont induites par le procédé de fusion utilisé lors de l'élaboration de la matière. Ces inclusions agissent comme des lieux de concentration de contraintes. Elles peuvent être le siège d'initiation de microfissures progressant en fatigue. La composition chimique, la quantité, la taille, et la distribution spatiale des inclusions sont des paramètres qui influencent cette tenue en fatigue. Il est par conséquent essentiel de pouvoir comptabiliser et classer les inclusions présentes dans un alliage donné. De plus, cette analyse métallurgique doit être réalisée sur des échantillons représentatifs de la pièce (dimensions suffisamment grande et même état de transformation).

Les méthodes actuelles de comptage d'inclusions sur alliages tels que des aciers consistent à observer une coupe micrographique au microscope optique et à comparer les inclusions observées à des planches de référence illustrant différents cas de présence d'inclusions. Cette méthode présente plusieurs inconvénients : la comparaison avec des planches manque de précision (il existe un biais en fonction de l'observateur), et aucune information sur la composition chimique des inclusions ne peut être obtenue. Il est donc nécessaire d'observer beaucoup d'échantillons pour être à même de qualifier la propreté inclusionnaire de l'alliage. La méthode est donc laborieuse et fastidieuse (opération manuelle), et en outre incomplète.

W. A. Spitzig et al., METALLOGRAPHY, Elsevier Science Publishing Co., vol. 16, n°2, mai 1983, pages 171-198, décrit un procédé et un système de comptage et d'analyse d'inclusions dans un alliage par analyse d'image.

L'invention vise à proposer un procédé d'analyse métallurgique qui permette de caractériser de façon satisfaisante la population inclusionnaire de n'importe quel alliage. Il s'agit donc de déterminer la quantité, la taille, la distribution spatiale, les compositions chimiques des inclusions présentes dans cet alliage, puis de combiner ces mesures le plus facilement et le plus précisément possible afin d'obtenir des gains de production lors de l'analyse de la propreté inclusionnaire de cet alliage.

Ce but est atteint grâce au fait que ce procédé comprend
(a) La préparation d'un échantillon de l'alliage,
(b) La détermination de seuils de détection des inclusions par l'observation, avec un grossissement, d'au moins un champ de cet échantillon.
(c) La détection des inclusions de cet échantillon en fonction des seuils définis à l'étape (b) et le dénombrement de ces inclusions,
(d) L'acquisition d'images de chacune de ces inclusions détectées à l'étape (c) et la détermination de la taille de chacune de ces inclusions,
(e) La détermination de la composition chimique de chacune de ces inclusions détectées par l'analyse chimique de chacune de celles-ci,
(f) La réalisation d'une cartographie de cet échantillon à partir des images acquises à l'étape (d), cette cartographie montrant la distribution spatiale des inclusions, où chacune des inclusions détectées est représentée par un élément graphique, la taille de cet élément graphique étant proportionnelle à la taille de cette inclusion, et la couleur de cet élément graphique étant corrélée à la composition chimique de cette inclusion.

Grâce à ces dispositions, tous les paramètres nécessaires au comptage et à l'analyse des inclusions sont mesurés sur un échantillon qui est choisi suffisamment grand pour être statistiquement représentatif de l'alliage, et les données recueillies sont combinées de façon optimale pour obtenir une cartographie des inclusions qui soit la plus complète et la plus facile et pratique à exploiter, de façon à gagner en productivité. En particulier, cette cartographie permet de déterminer si des inclusions sont regroupées de façon à former des amas dont la forme générale est susceptible d'être un lieu de concentration de contraintes, qui serait préjudiciable à la tenue en fatigue de l'alliage.

Avantageusement, le procédé de comptage et d'analyse d'inclusions comprend, après l'étape (f), l'étape suivante :
(g) L'analyse de l'échantillon à partir de la cartographie réalisée à l'étape (f) des inclusions détectées en fonction d'au moins un critère prédéterminé.

Cette analyse de l'échantillon à partir de la cartographie permet de vérifier la conformité ou non de l'alliage sur lequel l'échantillon a été prélevé.

L'invention concerne également un système de comptage et d'analyse d'inclusions dans un alliage.

Selon l'invention ce système comprend un microscope, un premier moyen apte à piloter ce microscope et à détecter, en fonction de seuils de détection, les inclusions présentes sur un échantillon de l'alliage et à dénombrer ces inclusions, un appareil d'analyse chimique apte à recueillir des données chimiques sur chacune de ces inclusions, un second moyen apte à acquérir une image de chacune de ces inclusions et à piloter l'appareil d'analyse chimique pour déterminer sa composition chimique à partir de ces données chimiques, un troisième moyen apte à réaliser une cartographie de l'échantillon montrant la distribution spatiale des inclusions, où chacune des inclusions détectées est représentée par un élément graphique, la taille de l'élément graphique étant proportionnelle à la taille de cette inclusion, et la couleur de cet élément graphique étant corrélée à la composition chimique de cette inclusion, et un dispositif d'affichage de cette cartographie.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 montre les étapes du procédé selon l'invention,
- la figure 2 montre l'image d'une inclusion dans un alliage et le résultat de son analyse chimique, obtenus par le procédé selon l'invention,
- la figure 3 montre une cartographie d'inclusions dans un acier Maraging 250, obtenue par un procédé selon l'invention.

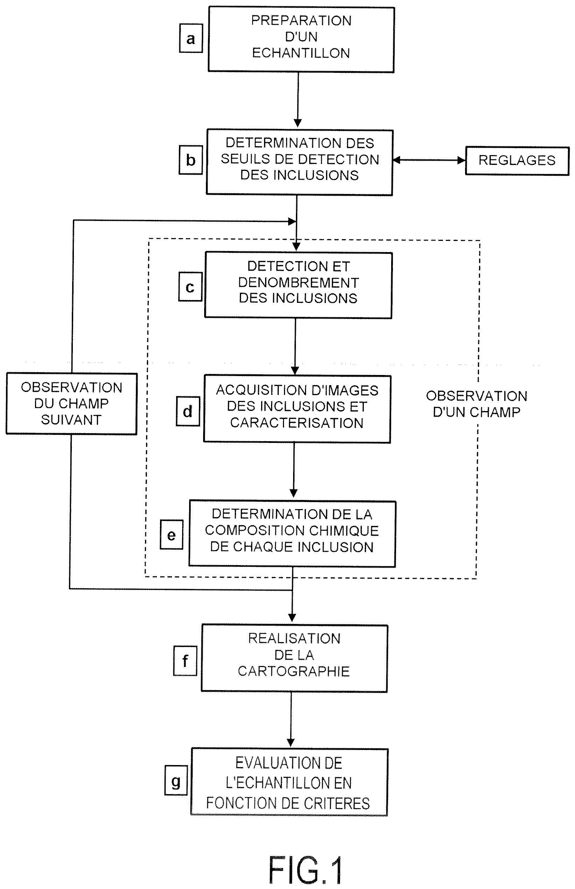

Le procédé selon l'invention va maintenant être décrit, en référence à la figure 1, qui représente une séquence des étapes de ce procédé.

L'analyse est effectuée à l'aide d'un microscope électronique, d'un système de microanalyse à dispersion d'énergie, et de plusieurs logiciels.

A l'étape (a), on prélève un échantillon de l'alliage à étudier, et on prépare cet échantillon selon des techniques connues. Cette préparation comprend un polissage de la surface de l'échantillon pour son observation au microscope. Le microscope utilisé est un microscope électronique à balayage (MEB). En effet le MEB permet d'atteindre des grossissements plus importants qu'un microscope optique. De plus, l'observation des électrons rétro-diffusés du MEB permet d'obtenir un meilleur contraste de niveau de gris entre les inclusions et la matrice de l'alliage.

Dans le cas de l'utilisation d'un MEB, on effectue un polissage de l'échantillon comprenant un polissage de finition sur un drap imprégné de diamant 1 micron, puis on recouvre cet échantillon d'un film conducteur or/palladium par exemple déposé à l'aide d'un métalliseur après passage dans une cuve ultrasons pour nettoyage. L'échantillon ainsi préparé est introduit dans la chambre du MEB.

L'échantillon est divisé en champs et on effectue l'analyse de chaque champ.

Un certain nombre de paramètres d'entrée du microscope doivent être définis avant de lancer l'analyse. Il s'agit notamment des paramètres suivants :
- Grossissement.
- Taille de l'image acquise (pixels).
- Nombre de champs à analyser.
- Répartition des champs.

Le grossissement du microscope définit la taille d'un champ, c'est-à-dire les dimensions de la surface examinée. Ce grossissement est compris entre 100 et 500, car sinon le temps d'analyse de chaque champ est trop important.

La taille de chaque image acquise par le microscope s'exprime en pixels, une image correspondant à un champ. Cette taille est par exemple de 512 x 512 pixels. La taille réelle de l'image dépend du grossissement. La taille minimale statistiquement valable d'un échantillon est d'environ 160 mm². Le grossissement et la taille sont choisis de telle sorte que chaque inclusion ait une taille d'au moins 10 pixels.

Le nombre de champs à analyser définit la surface totale de l'échantillon observé.

Par souci de facilité, cette surface de l'échantillon est balayée de telle sorte que le prochain champ analysé est adjacent au champ en cours d'analyse. La répartition des champs est donc continue.

A l'étape (b), on fixe plusieurs seuils de détection des inclusions.

Ainsi, des seuils de taille d'inclusions et de niveau de gris sont choisis pour déterminer si une zone d'une certaine taille dont le niveau de gris est différent de l'arrière plan correspond à une inclusion qui doit être analysée.

Par ailleurs, des seuils de composition chimique sont choisis en fonction de la nature de l'alliage examiné. On sélectionne une liste d'éléments susceptibles d'être présents dans les inclusions et on choisit des intervalles (seuils) de concentration sur chacun de ces éléments. La stoechiométrie d'une inclusion n'étant pas connue à l'avance, et une interaction chimique entre la matrice et une inclusion étant possible, il est nécessaire d'utiliser des intervalles de concentration. Ces intervalles sont établis en moyennant les résultats d'analyses chimiques obtenus et les tailles des inclusions observées par analyse et observation préalables effectuées sur 10 à 20 champs de cet alliage.

Au minimum, les seuils de détection comprennent une concentration minimale en au moins un élément chimique dans une inclusion.

Le choix des paramètres (seuils) ci-dessus s'accompagne généralement d'un réglage du microscope et de l'appareil d'analyse chimique mentionné ci-dessous.

A l'étape (c), on effectue la détection des inclusions. Cette détection est réalisée par un premier moyen logiciel L₁ d'analyse d'images et de dénombrement de particules, par exemple le logiciel Aphélion® (société ADCIS) muni d'un progiciel apte à dénombrer des particules. Ce premier moyen logiciel L₁ détecte (par binarisation de l'image) les inclusions qui doivent être analysées en utilisant les seuils de taille et de niveau de gris définis à l'étape (b), et dénombre toutes les inclusions.

En parallèle de cette opération de détection, le premier moyen logiciel L₁ pilote le microscope afin de balayer chaque champ.

A l'étape (d), le premier moyen logiciel L₁ pilote un second moyen logiciel L₂ d'acquisition d'image et d'analyse chimique. Ce second moyen logiciel L₂ acquiert une image du champ, cette image est ensuite transmise au moyen logiciel L₁ pour caractérisation de la forme (contour), de la taille (dimensions), et de la position dans le champ de chacune des inclusions détectées à l'étape (c) par le premier moyen logiciel L₁. Ce second moyen logiciel L₂ est par exemple le logiciel Spirit® (société SYNERGIE4/PGT).

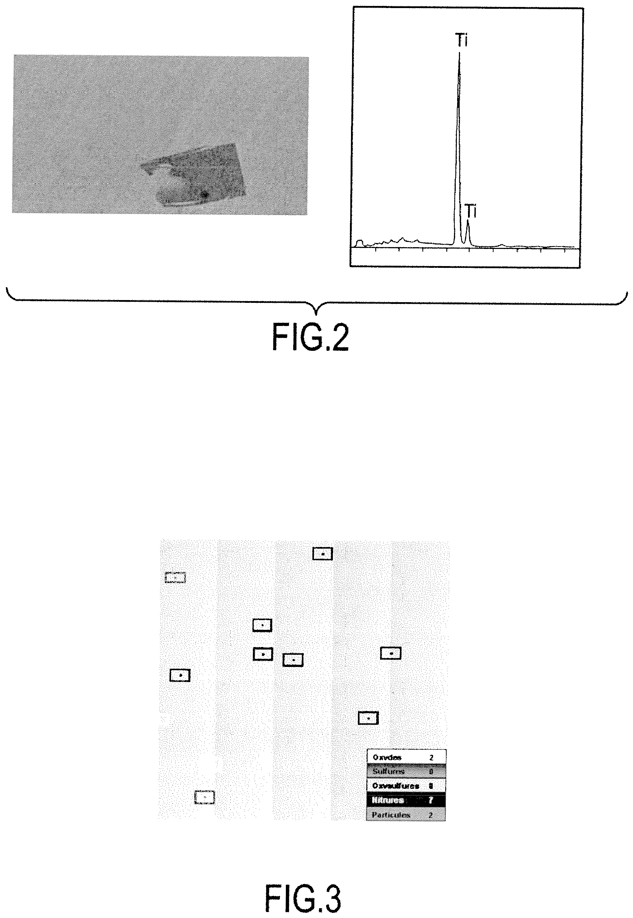

La partie gauche de la figure 2 est une image d'une partie du champ, qui montre une inclusion (en noir sur fond gris).

A l'étape (e), le second moyen logiciel L₂ pilote un appareil d'analyse chimique en utilisant les données fournies à L₂ par L₁ à l'étape (d) concernant la position des inclusions. Ces données permettent à L₂ d'effectuer l'analyse chimique de chacune des inclusions détectées et détermine le pourcentage de chaque élément identifié dans chaque inclusion. Les résultats sont transmis au moyen logiciel L₁ qui donne la composition chimique de chaque inclusion en utilisant les seuils de concentration choisis à l'étape (b) sur chacun des éléments chimiques caractéristiques présélectionnés. Par exemple, l'appareil d'analyse chimique est un spectromètre. Ce spectromètre est de préférence un système de microanalyse à dispersion d'énergie. Ce spectromètre est couplé au microscope (MEB).

La partie droite de la figure 2 montre les résultats de l'analyse chimique de l'inclusion de l'image sur la partie gauche de la figure 2. On distingue nettement le pic de concentration correspondant à l'élément titane Ti, ce qui permet d'identifier cette inclusion comme du nitrure de titane.

Les étapes (b) à (e) sont répétées pour chacun des champs couvrant une partie de la surface de l'échantillon, jusqu'à ce que toute la surface de l'échantillon ait été analysée.

A l'étape (f), un troisième moyen logiciel L₃ réalise une cartographie de l'échantillon à partir des images de tous les champs de l'échantillon, et des données récupérées par le premier logiciel L₁ et le second logiciel L₂ et transférées à ce troisième moyen logiciel L₃.

Dans cette cartographie, chacune des inclusions détectées est représentée par un élément graphique, la taille de cet élément graphique étant proportionnelle à la taille de cette inclusion. Une couleur est associée arbitrairement à chaque type d'inclusion en fonction de sa composition chimique qui a été déterminée à l'étape (e).

Un dispositif d'affichage, par exemple un écran, permet ensuite d'afficher la cartographie obtenue.

Une fois la cartographie obtenue, le procédé peut comprendre une étape supplémentaire d'évaluation de la validité de l'analyse de l'échantillon sur la base de certains critères.

Cette étape supplémentaire, l'étape (g) (voir figure 1), est effectuée manuellement par un opérateur. Cette étape correspond à un test de validité : si le test est positif, l'analyse est jugée valide, et ses résultats sont exploitables. Sinon l'analyse est jugée non valide ; elle n'est pas retenue, et d'autres analyses doivent être effectuées en modifiant certains paramètres d'entrée.

Par exemple, les données suivantes sont récupérées de la cartographie : nombre d'inclusions détectées, distribution spatiale des inclusions, taille des inclusions.

On donne ci-dessous l'exemple d'un acier Maraging 250 comportant des inclusions de nitrures et d'autres inclusions.

En ce qui concerne les inclusions de nitrures, si leur distribution spatiale est homogène, la dimension maximale des inclusions doit être inférieure à 20 µm (microns), et le nombre d'inclusions par champ de 0,5 mm² doit être inférieur ou égal à 4 et éventuellement compris entre 4 et 16 dans un seul des champs. Si les inclusions sont alignées ou regroupées en amas, la dimension maximale de ces amas/alignements doit être inférieure à 75 µm, le nombre de ces amas/alignements doit être au plus de un par champ de 0,5 mm², et leur épaisseur doit être inférieure à 9 µm.

En ce qui concerne les autres inclusions, si leur distribution spatiale est homogène, la dimension maximale des inclusions doit être inférieure à 20 µm, et le nombre d'inclusions par champ de 0,5 mm² doit être inférieur ou égal à 4. Si les inclusions sont alignées ou regroupées en amas, la dimension maximale de ces amas/alignements doit être inférieure à 75 µm , le nombre de ces amas/alignements est au plus de un par champ de 0,5 mm², et leur épaisseur doit être inférieure à 9 µm.

L'invention concerne également un système de comptage et d'analyse d'inclusions dans un alliage utilisant un procédé décrit ci-dessus, c'est à dire un système comprenant un microscope, un premier moyen logiciel L₁ apte à piloter ce microscope et à détecter, en fonction de seuils de détection, les inclusions présentes sur un échantillon de l'alliage et à dénombrer ces inclusions, un appareil d'analyse chimique apte à recueillir des données chimiques sur chacune de ces inclusions, un second moyen logiciel L₂ apte à acquérir une image de chacune de ces inclusions et à piloter l'appareil d'analyse chimique pour déterminer sa composition chimique à partir de ces données chimiques, un troisième moyen logiciel L₃ apte à réaliser une cartographie de l'échantillon où chacune des inclusions détectées est représentée par un élément graphique de taille proportionnelle à la taille de cette inclusion, et dont la couleur est corrélée à la composition chimique de cette inclusion. Le système comprend également un dispositif d'affichage de cette cartographie.

Tous les alliages métalliques sont aptes à être examinés par le système de comptage et d'analyse d'inclusions décrit ci-dessus. Ces alliages peuvent être un acier allié ou pas, un alliage base nickel, un alliage base cobalt, un alliage élaboré par métallurgie des poudres.

On donne ci-dessous des exemples où le procédé selon l'invention est appliqué au cas d'aciers Maraging 250.

### Exemple : Acier Maraging 250 X2NiCoMo18-8-5

Les paramètres d'entrée sont les suivants :
- Grossissement : 200
- Taille de l'image acquise (pixels) : 512*512
- Nombre de champs à analyser : 600
- Répartition des champs : continue.

Les seuils de détection des inclusions sont les suivants :
- Seuils de taille d'inclusions : 5 µm
- Seuils de niveau de gris : de 190 à 250
- Seuils de composition chimiques : voir table I ci-dessous

**TABLE I**

| | **Oxydes** | | **Sulfures** | | **Oxysulfures** | | **Nitrures de Titane** | |
|---|---|---|---|---|---|---|---|---|
| | Min | Max | Min | Max | Min | Max | Min | Max |
| **Fe** | 0,0 | 68,4 | 0,0 | 68,4 | 0,0 | 68,4 | 0,0 | 68,4 |
| **O** | 1,0 | 100,0 | 0,0 | 1,0 | 1,0 | 3,0 | 0,0 | 100,0 |
| **Mg** | 0,0 | 100,0 | 0,0 | 100,0 | 0,0 | 100,0 | 0,0 | 100,0 |
| **Al** | 0,0 | 100,0 | 0,0 | 100,0 | 0,0 | 100,0 | 0,0 | 100,0 |
| **Ca** | 0,0 | 100,0 | 0,0 | 100,0 | 0,0 | 100,0 | 0,0 | 100,0 |
| **Si** | 0,0 | 100,0 | 0,0 | 100,0 | 0,0 | 100,0 | 0,0 | 100,0 |
| **S** | 0,0 | 1,5 | 1,5 | 100,0 | 1,0 | 3,0 | 0,0 | 100,0 |
| **Ti** | 0,0 | 3,5 | 0,0 | 3,5 | 0,0 | 3,5 | 3,5 | 100,0 |
| **Ni** | 0,0 | 15,3 | 0,0 | 15,3 | 0,0 | 15,3 | 0,0 | 15,3 |
| **Co** | 0,0 | 6,3 | 0,0 | 6,3 | 0,0 | 6,3 | 0,0 | 6,3 |
| **Mn** | 0,0 | 100,0 | 0,0 | 100,0 | 0,0 | 100,0 | 0,0 | 100,0 |
| **Mo** | 0,0 | 100,0 | 0,0 | 100,0 | 0,0 | 100,0 | 0,0 | 100,0 |

Les résultats de l'analyse chimique montrent que les inclusions présentes dans l'alliage sont les suivantes :
- Inclusion de type 1 : Nitrures de titane
- Inclusion de type 2 : Oxydes
- Inclusion de type 3 : Sulfures

La figure 3 montre la cartographie d'inclusions obtenue pour l'échantillon analysé.

## Revendications

1. Procédé de comptage et d'analyse d'inclusions dans un alliage par analyse d'image, comprenant
(a) La préparation d'un échantillon dudit alliage,
(b) La détermination de seuils de détection des inclusions par l'observation, avec un grossissement, d'au moins un champ dudit échantillon.
(c) La détection des inclusions dudit échantillon en fonction des seuils définis à l'étape (b) et le dénombrement de ces inclusions,
(d) L'acquisition d'images de chacune desdites inclusions détectées à l'étape (c) et la détermination de la taille de chacune de ces inclusions,
(e) La détermination de la composition chimique de chacune de ces inclusions détectées par l'analyse chimique de chacune de celles-ci,
le procédé étant **caractérisé en ce qu'**il comprend :
(f) La réalisation d'une cartographie dudit échantillon à partir des images acquises à l'étape (d), cette cartographie montrant la distribution spatiale des inclusions, où chacune desdites inclusions détectées est représentée par un élément graphique, la taille dudit élément graphique étant proportionnelle à ladite taille de cette inclusion, et la couleur dudit élément graphique étant corrélée à ladite composition chimique de cette inclusion.

2. Procédé de comptage et d'analyse d'inclusions selon la revendication 1 dans lequel, à l'étape (b), les seuils de détection comprennent une dimension minimale d'inclusion, et une concentration minimale en au moins un élément chimique dans une inclusion.

3. Procédé de comptage et d'analyse d'inclusions selon la revendication 1 ou 2 comprenant, après l'étape (f), l'étape suivante :
(g) L'analyse de l'échantillon à partir de la cartographie réalisée à l'étape
(f) des inclusions détectées en fonction d'au moins un critère prédéterminé.

4. Procédé de comptage et d'analyse d'inclusions selon la revendication 3, dans lequel chaque critère est choisi parmi au moins la répartition des inclusions, la dimension de chaque inclusion, et le nombre des inclusions par unité de surface.

5. Procédé de comptage et d'analyse d'inclusions selon l'une quelconque des revendications 1 à 4 dans lequel ledit alliage est choisi parmi un acier au carbone, un alliage base nickel, un alliage base cobalt, un alliage élaboré par métallurgie des poudres.

6. Système de comptage et d'analyse d'inclusions dans un alliage, comprenant un microscope, un premier moyen apte à piloter ce microscope et à détecter, en fonction de seuils de détection, les inclusions présentes sur un échantillon dudit alliage et à dénombrer ces inclusions, un appareil d'analyse chimique apte à recueillir des données chimiques sur chacune desdites inclusions, un second moyen apte à acquérir une image de chacune de ces inclusions et à piloter l'appareil d'analyse chimique pour déterminer sa composition chimique à partir desdites données chimiques, le système étant **caractérisé en ce qu'**il comprend un troisième moyen apte à réaliser une cartographie dudit échantillon qui montre la distribution spatiale des inclusions où chacune desdites inclusions détectées est représentée par un élément graphique, la taille dudit élément graphique étant proportionnelle à la taille de cette inclusion, et la couleur dudit élément graphique étant corrélée à ladite composition chimique de cette inclusion, et un dispositif d'affichage de ladite cartographie.

7. Système selon la revendication 6 dans lequel lesdits seuils de détection comprennent une dimension minimale d'inclusion, et une concentration minimale en au moins un élément chimique dans une inclusion.

8. Système selon la revendication 6 ou 7 dans lequel ledit microscope est un MEB, et ledit appareil d'analyse chimique est système de microanalyse à dispersion d'énergie.

## Patentansprüche

1. Verfahren zum Zählen und Analysieren von Einschlüssen in einer Legierung mittels Bildanalyse, umfassend
(a) Herstellen einer Probe der Legierung,
(b) Bestimmen der Erfassungsgrenzwerte der Einschlüsse durch Beobachtung von mindestens ein Feld der Probe unter Vergrößerung,
(c) Erfassen der Einschlüsse der Probe in Abhängigkeit von den in Schritt (b) definierten Grenzwerten und Auszählen dieser Einschlüsse,
(d) Aufnehmen von Bildern von jedem der in Schritt (c) erfassten Einschlüsse und Bestimmen der Größe jedes dieser Einschlüsse,
(e) Bestimmen der chemischen Zusammensetzung jedes dieser Einschlüsse, die durch deren jeweilige chemische Analyse nachgewiesen wird,
wobei das Verfahren **dadurch gekennzeichnet ist, dass** es ferner umfasst:
(f) Herstellen einer Kartierung der Probe ausgehend von den in Schritt (d) aufgenommenen Bildern, wobei die Kartierung die räumliche Verteilung der Einschlüsse zeigt, wobei jeder der erfassten Einschlüsse durch ein Grafikelement dargestellt wird, wobei die Größe des Grafikelements proportional zu der Größe des Einschlusses ist und die Farbe des Grafikelements mit der chemischen Zusammensetzung des Einschlusses korreliert.

2. Verfahren zum Zählen und Analysieren von Einschlüssen gemäß Anspruch 1, wobei in Schritt (b) die Erfassungsgrenzwerte eine minimale Einschlussgröße und eine minimale Konzentration von mindestens einem chemischen Element in einem Einschluss umfassen.

3. Verfahren zum Zählen und Analysieren von Einschlüssen gemäß Anspruch 1 oder 2, umfassend nach Schritt (f) den folgenden Schritt:
(g) Analysieren der Probe ausgehend von der in Schritt (f) durchgeführten Kartierung der erfassten Einschlüsse in Abhängigkeit von mindestens einem vorgegebenen Kriterium.

4. Verfahren zum Zählen und Analysieren von Einschlüssen gemäß Anspruch 3, wobei jedes Kriterium aus mindestens der Verteilung der Einschlüsse, der Größe jedes Einschlusses und der Anzahl der Einschlüsse pro Flächeneinheit ausgewählt wird.

5. Verfahren zum Zählen und Analysieren von Einschlüssen gemäß einem der Ansprüche 1 bis 4, wobei die Legierung aus Kohlenstoffstahl, Nickelbasislegierung, Kobaltbasislegierung und pulvermetallurgischer Legierung ausgewählt ist.

6. System zum Zählen und Analysieren von Einschlüssen in einer Legierung, umfassend ein Mikroskop, ein erstes Mittel, das geeignet ist, das Mikroskop zu steuern und in Abhängigkeit von Erfassungsgrenzwerten die in einer Probe der Legierung vorhandenen Einschlüsse zu erfassen und die Einschlüsse auszuzählen, ein chemisches Analysegerät, das geeignet ist, chemische Daten über jeden der Einschlüsse zu erheben, ein zweites Mittel, das geeignet ist, ein Bild von jedem der Einschlüsse aufzunehmen und das chemische Analysegerät zu steuern, um dessen chemische Zusammensetzung ausgehend von den chemischen Daten zu bestimmen, wobei das System **dadurch gekennzeichnet ist, dass** es ein drittes Mittel, das geeignet ist, eine Kartierung der Probe herzustellen, die die räumliche Verteilung der Einschlüsse zeigt, wobei jeder der erfassten Einschlüsse durch ein Grafikelement dargestellt wird, wobei die Größe des Grafikelements proportional zur Größe des Einschlusses ist und die Farbe des Grafikelements mit der chemischen Zusammensetzung des Einschlusses korreliert, und eine Vorrichtung zur Anzeige der Kartierung umfasst.

7. System gemäß Anspruch 6, wobei die Erfassungsgrenzwerte eine minimale Einschlussgröße und eine minimale Konzentration von mindestens einem chemischen Element in einem Einschluss umfassen.

8. System gemäß Anspruch 6 oder 7, wobei das Mikroskop ein REM ist und das chemische Analysegerät ein energiedispersives Mikroanalysesystem ist.

## Claims

1. A method of counting and analyzing inclusions in an alloy by image analysis, the method comprising:
a) preparing a sample of said alloy;
b) determining inclusion detection thresholds by observation, with magnification, of at least one field of said sample;
c) detecting inclusions of said sample as a function of the threshold defined in step b), and counting the inclusions;
d) acquiring images of each of the inclusions detected in step c) and determining the size of each of the inclusions;
e) determining the chemical composition of each of the detected inclusions by chemically analyzing each of them;
the method being **characterized by** comprising:
f) making a map of said sample from the images acquired in step d), the map showing the spatial distribution of the inclusions, in which each of said detected inclusions is represented by a graphics element, the size of said graphics element being proportional to the size of said inclusion, and the color of this graphics element being correlated to said chemical composition of the inclusion.

2. A method of counting and analyzing inclusions according to claim 1, wherein in step b), the detection thresholds comprise a minimum dimension for an inclusion, and a minimum concentration of at least one chemical element in an inclusion.

3. A method of counting and analyzing inclusions according to claim 1 or claim 2, the method including, after step f), the following step:
g) using the map of the detected inclusions made in step f) to analyze the sample as a function of at least one predetermined criterion.

4. A method of counting and analyzing inclusions according to claim 3, wherein each criterion is selected from at least: the distribution of the inclusions; the dimensions of each inclusion; and the number of inclusions per unit area.

5. A method of counting and analyzing inclusions according to any one of claims 1 to 4, wherein said alloy is selected from: a carbon steel; a nickel-based alloy; a cobalt-based alloy; an alloy produced by powder metallurgy.

6. A system for counting and analyzing inclusions in an alloy, comprising: a microscope; first means suitable for controlling the microscope, for detecting, as a function of detection thresholds, the inclusions present in a sample of said alloy and for counting the inclusions; chemical analysis apparatus suitable for obtaining chemical data from each of said inclusions; second means suitable for acquiring an image of each of the inclusions and for controlling the chemical analysis apparatus to determine the chemical composition thereof from said chemical data; the system being **characterized by** comprising third means suitable for making a map of said sample showing the spatial distribution of the inclusions in which each of said detected inclusions is represented by a graphics element, the size of said graphics element being proportional to the size of the inclusion, and the color of said graphics element being correlated to said chemical composition of the inclusion; and a device for displaying said map.

7. A system according to claim 6, wherein said detection thresholds comprise: a minimum dimension for an inclusion; and a minimum concentration of at least one chemical element in an inclusion.

8. A system according to claim 6 or claim 7, wherein said microscope is a scanning electron microscope, and said chemical analysis appliance is an energy dispersion microanalysis system.
